# EUROPEAN PATENT SPECIFICATION

(11) **EP 3 215 319 B1**
(45) Date of publication and mention of the grant of the patent: **01.01.2025**
(21) Application number: 14905627.7
(22) Date of filing: 07.11.2014
(51) Int. Cl.: B25J 9/00, B25J 15/06, B25J 15/00, B25J 15/02, B25J 19/02

(54) **AN INTEGRATED GRIPPER AND A ROBOT**
INTEGRIERTER GREIFER UND ROBOTER
DISPOSITIF DE PRÉHENSION INTÉGRÉ ET ROBOT

(43) Date of publication of application: 13.09.2017
(73) Proprietor: ABB Schweiz AG, 5400 Baden (CH)
(72) Inventor: HE, Xueying, Shanghai 201210 (CN); YANG, Jun, Shanghai 201206 (CN); GUAN, Liangyong, Shanghai 201200 (CN); LI, Wenlong, Shanghai 201319 (CN)
(74) Representative: Zimmermann & Partner Patentanwälte mbB
(86) International application number: PCT/CN2014/090587
(87) International publication number: WO 2016/070412

(56) References cited:
- EP-A1- 0 841 297
- WO-A1-2011/144876
- CN-A- 101 019 484
- CN-A- 101 273 688
- CN-A- 101 360 588
- KR-A- 20140 025 073
- US-A- 4 909 376
- US-A- 5 050 919
- US-A- 5 237 468
- US-A1- 2007 280 812
- US-A1- 2009 320 417

## Description

### FIELD OF THE INVENTION

Embodiments of the present disclosure generally relate to a gripper, and particularly relate to a gripper in a robot.

### BACKGROUND OF THE INVENTION

**A** gripper is usually needed by the robot. Currently, there are lots of grippers in the market, but normally they only have unique function, and a servo driver is further required to work together with the gripper, which generally increase the size, weight and cost of the gripper system.

Various attempts have been made to make it lighter and smaller, or with more functions. Typical solution is using pneumatic grippers, however, which cannot control the force and position of the grippers. In some cases a pneumatic suction cup is used to pick up objects, but additional valve units are also required.

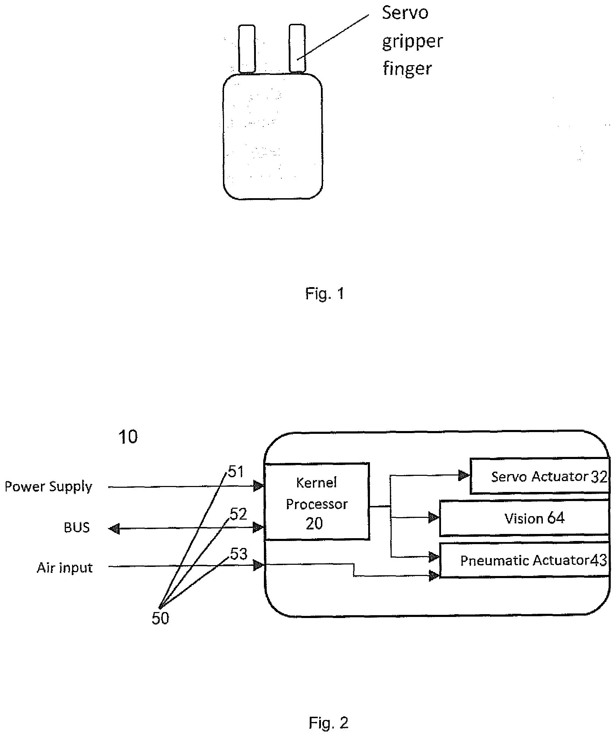

Another existing solution is using a servo gripper as shown in Fig. 1 however, separate drive module should be prepared for the gripper, which increases the complexity a lot.

US 2007/280812 A1 describes a material handling tool comprising a longitudinal body provided with a proximate end and a distal end is described herein. The handling tool includes a vacuum jaw assembly so mounted to the distal end of the body as to be transversally movable; and a longitudinally movable jaw assembly so mounted to the longitudinal body as to be longitudinally movable between a retracted position where the movable jaw assembly is adjacent to the longitudinal body and an extended position where the movable jaw assembly faces the vacuum jaw assembly.

US 5237468 A describes a reliable automated storage library by mounting two CCD cameras on a turret plate with two grippers, the CCD cameras providing video support for both grippers. The turret plate is rotatably mounted on the end of an anthropomorphic robot arm so that the cameras and grippers are rotated and angled into position as needed for viewing or gripping. A CCD camera is positioned to view a tape cartridge for capturing an image of the label attached thereto. While the captured image is being processed to verify its identity, the first gripper is rotated into position and moved forward to grip the desired tape cartridge. The robot arm then moves the camera and gripper assembly to a tape drive and rotates the second gripper into position to remove another tape cartridge from the tape drive. The turret plate is again rotated to position the first gripper to insert the verified tape cartridge into the tape drive. Thus pick-before-place operations may be performed by a single camera and two grippers. The second camera is added to increase reliability for pick-before-place. If either gripper fails, a single camera and a single gripper in any combination will allow the automated storage library to continue to provide storage and retrieval functions.

US 2009/320417 A1 describes an end of arm tool that is capable of handling fragile items such as eggs that are packaged in containers (e.g., egg cartons) that require special handling is provided. The end of arm tool comprises pivotal clamps operated by slidingcontact linear actuators and return springs. A retractable gripper for placing divider sheets between packages in the cases may be disposed above the clamps and oriented 90 degrees from the clamps, so that the clamps and gripper may be attached to the same tool without either obstructing the operation of the other. In addition, a method of loading packages, and optionally divider sheets, into cases using the end of arm tool apparatus of the present invention is provided.

KR 20140025073 A describes a work tool having gripping and suction functions of an object and, more specifically, to a work tool for enabling the gripping and suction of an object, and stably and efficiently performing a pick-and-place work. Therefore, the provided work tool having gripping and suction functions of an object includes: a pair of absorption plates; a pair of gripping portions which are mounted on one end of the absorption plates, and extended vertically from one end of the absorption plates; a driving unit which is combined to the gripping portions, and which adjust the space between the gripping portions; and a buffering member arranged between the gripping portions and the driving unit to absorb the reaction generated when an object is gripped.

EP 0841297 A1 describes a baggage handling device comprising, in combination, a vacuum gripping foot and a non-vacuum, mechanical engagement device such as a simple hook or a power operated claw, with means to select either the vacuum gripping foot, or the mechanical device as appropriate, for any particular item of baggage; with a powered hoisting means to raise and lower the duplex unit, as necessary in a baggage handling sequence.

In view of the foregoing, there is a need in the art to develop an improved gripper with the combination of servo gripping, pneumatic suction and vision functions with compact solution.

### SUMMARY OF THE INVENTION

The object of the present invention is to provide an integrated gripper, makes the gripper more functional with compact solution and makes the robot system more flexible.

According to one aspect of the invention, there is provided an integrated gripper. Said integrated gripper comprises a kernel processor, a servo gripper finger member, a pneumatic member and an interface member; said servo gripper finger member comprises at least two fingers, a servo actuator and a motor, said fingers being driven by said motor to grip and/or move an object; said pneumatic member, comprising a cup, a vacuum generator and a pneumatic actuator, is configured to suck and/or blow off an object; said kernel processor is configured to control said servo actuator of said servo gripper finger member and said pneumatic actuator of said pneumatic member; and said interface member comprises a power supply interface, a bus interface and an air input interface, said power supply interface, said bus interface and said air input interface being connectable to a power supply, a bus and an air input respectively.

According to a preferred embodiment of the present invention,said gripper further comprises a vision member, for object detection and calculation, and said kernel processor is configured to control said vision member.

According to a preferred embodiment of the present invention, said vision member comprises a camera and a standalone calculation unit, said camera comprising a camera lighting and a camera lens, said standalone calculation unit being controlled by said kernel processor and capable of outputting results to said kernel processor.

According to a preferred embodiment of the present invention, said pneumatic member further comprises a filter and a pressure sensor, said pressure sensor being configured to detect the air pressure of said cup.

According to a preferred embodiment of the present invention, said pneumatic member further comprises a vacuum generator, a first valve and a second valve, said first valve and said second valve being configured to open and close alternatively, to make said cup suck or blow off an object.

According to a preferred embodiment of the present invention, said integrated gripper comprises one, two or more than two said pneumatic members.

According to an optional exemplary embodiment, there is provided an integrated gripper. Said integrated gripper comprises a kernel processor, a servo gripper finger member, a vision member and an interface member; said servo gripper finger member comprises at least two fingers, a servo actuator and a motor, said fingers being driven by said motor to grip and/or move an object; said vision member is used for object detection and calculation; said kernel processor is configured to control said servo actuator of said servo gripper finger member and said vision member; and said interface member comprises a power supply interface and a bus interface, said power supply interface and said bus interface being connected to a power supply and a bus respectively.

According to a preferred embodiment of the present invention, said vision member comprises a camera and a standalone vision calculation unit, said camera comprising a camera lighting and a camera lens, said standalone vision calculation unit being controlled by said kernel processor and capable of outputting results to said kernel processor.

According to a preferred embodiment of the present invention, said servo gripper finger member further comprises a gear box and a pinion-rack mechanism, said gear box and said pinion-rack mechanism being configured to drive said fingers to move in parallel, for gripping and/or moving an object.

According to a preferred embodiment of the present invention, said kernel processor controls the current, speed and position of said servo gripper finger member through said servo actuator.

According to a preferred embodiment of the present invention, said servo gripper finger member further comprises a position feedback unit to form a closed-loop control.

According to a preferred embodiment of the present invention, said integrated gripper is controlled by a user through said bus.

According to a preferred embodiment of the present invention, said bus interface is configured to accept the control signal from the user, and keep the user monitor the status of said integrated gripper.

According to a preferred embodiment of the present invention, said power supply is a direct-current (DC) power supply, and said motor is a DC motor.

According to another aspect of the invention, there is provided a robot comprising the integrated gripper as described above.

Compared with the existing prior arts, the solution for gripper can achieve several advantages as below.

Multi-functions: the present invention integrates multi-functional modules, to conduct motion control, valve control and visual supervision.

Intelligent automatic control: the present invention can improve control speed of the whole robot, while ensure the control accuracy of the gripper.

Compact: the present invention has a compact solution with the combination of intelligent grippers, pneumatic function, and view-function. Furthermore, the control unit is also inside the gripper. Its size and weight are extremely small compared to other products.

Other features and advantages of embodiments of the present application will also be understood from the following description of specific exemplary embodiments when read in conjunction with the accompanying drawings, which illustrate, byway of example, the principles of the invention.

### BRIEF DESCRIPTION OF THE DRAWINGS

The above and other features of the present disclosure will become more apparent through detailed explanation on the embodiments as illustrated in the description with reference to the accompanying drawings, throughout which like reference numbers represent same or similar components and wherein:
Fig. 1 shows the structure of a conventional gripper;
Fig. 2 shows a scheme of the kernel processor of the integrated gripper according to an embodiment of the present invention;
Fig. 3 shows a scheme of the servo gripper finger member of the integrated gripper according to an embodiment of the present invention;
Fig. 4 shows a scheme of the pneumatic member of the integrated gripper according to an embodiment of the present invention;
Fig. 5 shows an integrated gripper according to a first embodiment of the present invention;
Fig. 6 shows an integrated gripper according to a second embodiment of the present invention;
Fig. 7 shows an integrated gripper according to a third embodiment of the present invention;
Fig. 8 shows an integrated gripper according to a fourth embodiment of the present invention;

Throughout the figures, same or similar reference numbers indicate same or similar elements.

### DETAILED DESCRIPTION OF PREFERRED EMBODIMENTS

Hereinafter, solutions as provided the present disclosure will be described in details through embodiments with reference to the accompanying drawings. It should be appreciated that these embodiments are presented only to enable those skilled in the art to better understand and implement the present disclosure, not intended to limit the scope of the present disclosure in any manner.

Generally, all terms used in the claims are to be interpreted according to their ordinary meaning in the technical field, unless explicitly defined otherwise herein. All references to "a/an/the/said [element, device, component, means, step, etc.]" are to be interpreted openly as referring to at least one instance of said element, device, component, means, unit, step, etc., without excluding a plurality of such devices, components, means, units, steps, etc., unless explicitly stated otherwise. Besides, the indefinite article "a/an" as used herein does not exclude a plurality of such steps, units, modules, devices, and objects, and etc.

In general, embodiments of the present application provide a new gripper of a robot. As will be apparent from the further discussions below, several options modules, including a servo gripper finger member, at least one pneumatic member and a vision member, are employed to provide an integrated gripper.

### Embodiment 1: Finger and One Pneumatic Member

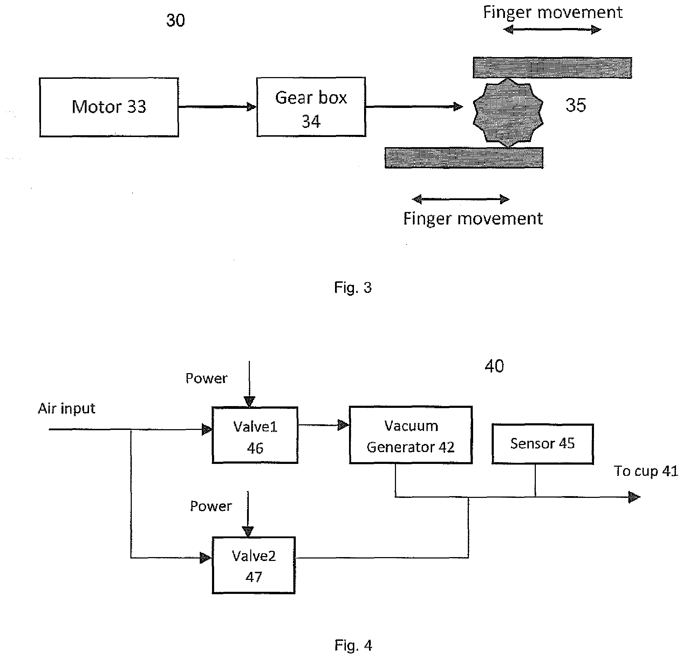

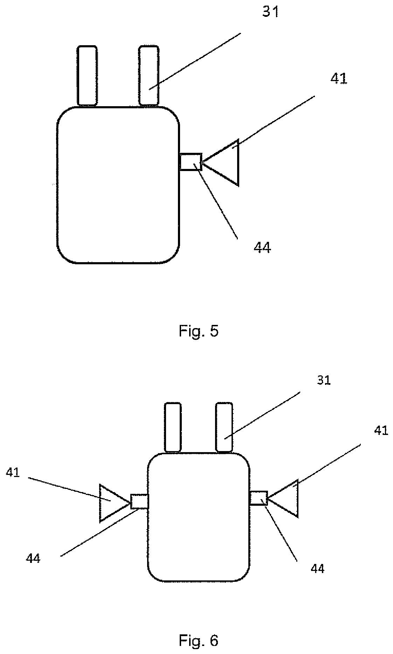

Reference is first made to Figs. 2 to 5, which shows an integrated gripper 10 for use in a robot according to a first embodiment of the present invention. The integrated gripper 10 comprises a kernel processor 20, a servo gripper finger member 30, a pneumatic member 40 and an interface member 50. The servo gripper finger member 30 comprises two or more fingers 31 as shown in Fig. 5, and a servo actuator 32, a motor 33 as shown in Fig. 3. The fingers 32 are driven by the motor 33 to grip or move an object. The pneumatic member 40 is used for sucking or blowing off an object As shown in Fig. 4 and 5, it comprises a cup 41, a vacuum generator 42 and a pneumatic actuator 43.

As shown in Fig. 2, the kernel processor 20 is configured to control the servo actuator 32 of the servo gripper finger member 30 and the pneumatic actuator 43 of the pneumatic member 40.

As also shown in Fig. 2, the interface member 50 comprises a power supply interface 51, a bus interface 52 and an air input interface 53. The power supply interface 51, the bus interface 52 and the air input interface 53 are connected to a power supply, a bus and an air input respectively.

Therefore, by having the servo gripper finger member 30 and the pneumatic member 40, a new gripper can be designed to achieve multi-functions with compact solution. This new gripper with control system has bus communication function, servo gripping function, pneumatic suction and blow off functions, etc. All functions are combined in one gripper and each function can also be modularized. For example, a user can just select servo gripping function, which includes the servo gripper module only, to save weight and cost.

The above describes one kind of integrated gripper 10, but the structures of the gripper 10 are not limited to the above, and it can also adopt, but not limited to, other structures as described below.

As shown in Fig. 3, one way to arrange the servo finger member 30 is to have a gear box 34 and a pinion-rack mechanism 35. The gear box 34 and the pinion-rack mechanism drive the fingers 31 to move in parallel. So the fingers 31 can grip or move an object.

As shown in Fig. 4, one way to arrange the pneumatic member is to have a filter 44 and a pressure sensor 45. So the air pressure of the cup 41 can be detected by the pressure sensor 45.

As shown in Fig. 4, another way to arrange the pneumatic member is to have a vacuum generator 42, a first valve 46 and a second valve 47. When the first valve 46 open and the second valve 47 close, it will form a vacuum by the vacuum generator 42 around the cup 41, so the cup 41 can suck an object. When the first valve 46 close and the second valve 47 open, it will form a positive pressure around the cup 41, so the cup 41 can blow off an object.

According to another embodiment of the present invention, the kernel processor 20 controls the current, speed and position of the servo gripper finger member 30 through the servo actuator 32. Furthermore, the servo gripper finger member can also have a position feedback unit to form a closed-loop control. So it can improve control speed of the gripper, while ensure the control accuracy of the gripper.

According to another embodiment of the present invention, the kernel processor 20 of the integrated gripper 10 is controlled by a user through the bus. Furthermore, the bus interface 52 can also accept the control signal from the user, and keep the user monitor the status of the integrated gripper 10. As the control unit is inside the gripper. Its size and weight are extremely small compared to other products.

According to another embodiment of the present invention, the power supply is a DC power supply, so the motor is a DC motor. However, the power supply can also be a AC power supply upon requirements.

### Embodiment 2: Finger and Several Pneumatic Members

Reference is next made to Figs. 2 to 4 and 6, which shows an integrated gripper 10 for use in a robot according to a second embodiment of the present invention.

The integrated gripper 10 comprises a kernel processor 20, a servo gripper finger member 30, two or more pneumatic members 40 and an interface member 50. It is noted that, in the second and subsequent embodiments, the components identical with or similar to those in the first embodiment are given the same reference numerals, and repeated descriptions of some similar elements will be omitted.

As shown in Fig. 6, the gripper 10 according to the second embodiment can have two or more channels of pneumatic functions. By having several pneumatic members 40, a new gripper can be designed to increase the working area and facilitate the flexibility of suction and blowing off functions in object picking.

### Embodiment 3: Finger and Smart Camera

Reference is next made to Figs. 2 to 4 and 7, which shows an integrated gripper 10 *for* use in a robot according to a third embodiment of the present invention.

The integrated gripper 10 comprises a kernel processor 20, a servo gripper finger member 30, a vision member 60 and an interface member 50.

The vision member 60 can be a smart camera, which is used for object detection and calculation. The kernel processor 20 can also control the vision member 60 as shown in Fig. 2.

The advantages of having the vision member 60 comprise providing detecting and view function, and ensuring the control accuracy of the gripper. This visual supervision feature makes a gripper more functional and makes the robot system more flexible with compact structure. So the size and weight of the robot are further saved by the third embodiment.

One way to arrange the vision member 60 is to have a camera 61 and a standalone vision calculation unit 64. The camera 61 comprises a camera lighting 62 and a camera lens 63. So integrated lighting is provided for the vision. And the standalone vision calculation unit 64 is controlled by the kernel processor 20 and capable of outputting results to the kernel processor 2O. With the standalone vision calculation unit 64, the vision member 60 can easily process the imaging information without other module.

### Embodiment 4: Finger, Smart Camera and Pneumatic Member(s)

Reference is next made to Figs. 2 to 4 and 8, which shows an integrated gripper 10 for use in a robot according to a fourth embodiment of the present invention.

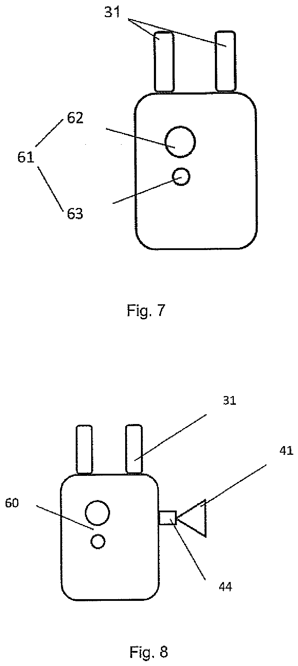

As shown in Fig. 8, the integrated gripper 10 comprises a kernel processor 20, a servo gripper finger member 30, a pneumatic member 40, a vision member 60 and an interface member 50. It is noted that, the components identical with or similar to those in the above embodiments are given the same reference, and repeated descriptions of some similar elements will be omitted.

The present embodiment with multi-functional modules has a compact solution with the combination of intelligent grippers, pneumatic function, and view function. Its size and weight are extremely small compared to other products. Therefore, by having several modules, a new gripper can be designed to facilitate its compactness, flexibility and reliability. Furthermore, as each member is formed as a separate module, a user can select among these multi-functions, to save weight and cost.

Another embodiment of the present application, the pneumatic member 40 can be not only one, but also more members upon requirement.

## Claims

1. An integrated gripper (10), wherein
said integrated gripper (10) comprises a kernel processor (20), a servo gripper finger member (30), a pneumatic member (40) and an interface member (50);
said servo gripper finger member (30) comprises at least two fingers (31 ), a servo actuator (32) and a motor (33), said fingers (32) being driven by said motor (33) to grip and/or move an object;
said pneumatic member (40), comprising a cup (41), a vacuum generator (42) and a pneumatic actuator (43), is configured to suck and/or blow off an object;
said kernel processor (20) is configured to control said servo actuator (32) of said servo gripper finger member (30) and said pneumatic actuator (43) of said pneumatic member (40); and
said interface member (50) comprises a power supply interface (51), a bus interface (52) and an air input interface (53), said power supply interface (51), said bus interface (52) and said air input interface (53) being connectable to a power supply, a bus and an air input respectively.

2. The integrated gripper (10) according to claim 1, **characterized in that**,
said gripper (10) further comprises a vision member (60), for object detection and calculation, and said kernel processor (20) is configured to control said vision member (60).

3. The integrated gripper (10) according to claim 2, **characterized in that**,
said vision member (60) comprises a camera (61) and a standalone vision calculation unit (64),
said camera (61) comprising a camera lighting (62) and a camera lens (63),
said standalone vision calculation unit (64) being controlled by said kernel processor (20) and capable of outputting results to said kernel processor (20).

4. The integrated gripper (10) according to claim 1, **characterized in that**,
said pneumatic member (40) further comprises a filter (44) and a pressure sensor (45),
said pressure sensor (45) being configured to detect the air pressure of said cup (41),

5. The integrated gripper (10) according to claim 1, **characterized in that**,
said pneumatic member (40) further comprises a vacuum generator (42), a first valve (46) and a second valve (47),
said first valve (46) and said second valve (47) being configured to open and close alternatively, to make said cup (41) suck or blow off an object.

6. The integrated gripper (10) according to claim 1, **characterized in that**,
said integrated gripper (10) comprises one, two or more than two said pneumatic members (40).

7. The integrated gripper (10) according to any one of claims 1 to 6, **characterized in that**,
said servo gripper finger member (30) further comprises a gear box (34) and a pinion-rack mechanism (35),
said gear box (34) and said pinion-rack mechanism (35) being configured to drive said fingers (31) to move in parallel, for gripping and/or moving an object.

8. The integrated gripper (10) according to claim 7, **characterized in that**,
said kernel processor (20) controls the current, speed and position of said servo gripper finger member (30) through said servo actuator (32).

9. The integrated gripper (10) according to claim 8, **characterized in that**,
said servo gripper finger member (30) further comprises a position feedback unit to form a closed-loop control.

10. The integrated gripper (10) according to any one of claims 1 to 6, **characterized in that**, said integrated gripper (10) is controlled by a user through said bus.

11. The integrated gripper (10) according to claim 10, **characterized in that**,
said bus interface (52) is configured to accept the control signal from the user, and keep the user monitor the status of said integrated gripper (10).

12. The integrated gripper (10) according to any one of claims 1 to 6, **characterized in that**, said power supply is a direct-current (DC) power supply, and said motor is a DC motor.

13. A robot comprising the integrated gripper (10) according any one of claims 1 to 12.

## Patentansprüche

1. Integrierter Greifer (10), wobei
der integrierte Greifer (10) einen Kernprozessor (20), ein Servogreif-Fingerelement (30), ein pneumatisches Element (40) und ein Schnittstellenelement (50) umfasst,
das Servogreif-Fingerelement (30) mindestens zwei Finger (31), einen Servoaktuator (32) und einen Motor (33) umfasst, wobei die Finger (32) durch den Motor (33) angetrieben werden, um ein Objekt zu greifen und/oder zu bewegen,
das pneumatische Element (40), das eine Schale (41), einen Vakuumerzeuger (42) und einen pneumatischen Aktuator (43) umfasst, so konfiguriert ist, dass es ein Objekt ansaugt und/oder abbläst;
der Kernprozessor (20) so konfiguriert ist, dass er den Servoaktuator (32) des Servogreif-Fingerelements (30) und den pneumatischen Aktuator (43) des pneumatischen Elements (40) steuert; und
das Schnittstellenelement (50) eine Stromversorgungsschnittstelle (51), eine Busschnittstelle (52) und eine Lufteingangsschnittstelle (53) umfasst, wobei die Stromversorgungsschnittstelle (51), die Busschnittstelle (52) und die Lufteingangsschnittstelle (53) jeweils mit einer Stromversorgung, einem Bus und einem Lufteingang verbunden werden können.

2. Integrierter Greifer (10) gemäß Anspruch 1, **dadurch gekennzeichnet, dass**
der Greifer (10) ferner ein Sichtelement (60) zur Objekterkennung und -berechnung umfasst und der Kernprozessor (20) so konfiguriert ist, dass er das Sichtelement (60) steuert.

3. Integrierter Greifer (10) gemäß Anspruch 2, **dadurch gekennzeichnet, dass**
das Sichtelement (60) eine Kamera (61) und eine eigenständige Sichtberechnungseinheit (64) umfasst, wobei die Kamera (61) eine Kamerabeleuchtung (62) und ein Kameralinse (63) umfasst,
die eigenständige Sichtberechnungseinheit (64) durch den Kernprozessor (20) gesteuert wird und Ergebnisse an den Kernprozessor (20) ausgeben kann.

4. Integrierter Greifer (10) gemäß Anspruch 1, **dadurch gekennzeichnet, dass**
das pneumatische Element (40) ferner einen Filter (44) und einen Drucksensor (45) umfasst, wobei der Drucksensor (45) so konfiguriert ist, dass er den Luftdruck der Schale (41) erfasst.

5. Integrierter Greifer (10) gemäß Anspruch 1, **dadurch gekennzeichnet, dass**
das pneumatische Element (40) ferner einen Vakuumgenerator (42), ein erstes Ventil (46) und ein zweites Ventil (47) umfasst, wobei
das erste Ventil (46) und das zweite Ventil (47) so konfiguriert sind, dass sie sich abwechselnd öffnen und schließen, um die Schale (41) dazu zu bringen, einen Gegenstand anzusaugen oder wegzublasen.

6. Integrierter Greifer (10) gemäß Anspruch 1, **dadurch gekennzeichnet, dass**
der integrierte Greifer (10) ein, zwei oder mehr als zwei der pneumatischen Elemente (40) umfasst.

7. Integrierter Greifer (10) gemäß einem der Ansprüche 1 bis 6, **dadurch gekennzeichnet, dass** das Servogreif-Fingerelement (30) ferner ein Getriebegehäuse (34) und einen Ritzel-Zahnstangen-Mechanismus (35) umfasst, wobei
wobei das Getriebegehäuse (34) und der Ritzel-Zahnstangen-Mechanismus (35) so konfiguriert sind, dass sie die Finger (31) so antreiben, dass sie sich parallel bewegen, um ein Objekt zu greifen und/oder zu bewegen.

8. Integrierter Greifer (10) gemäß Anspruch 7, **dadurch gekennzeichnet, dass**
der Kernprozessor (20) den Strom, die Geschwindigkeit und die Position des Servogreif-Fingerelements (30) über den Servoaktuator (32) steuert.

9. Integrierter Greifer (10) gemäß Anspruch 8, **dadurch gekennzeichnet, dass**
das Servogreif-Fingerelement (30) ferner eine Positionsrückkopplungseinheit umfasst, um eine Regelung zu bilden.

10. Integrierter Greifer (10) gemäß einem der Ansprüche 1 bis 6, **dadurch gekennzeichnet, dass** der integrierte Greifer (10) von einem Nutzer über den Bus gesteuert wird.

11. Integrierter Greifer (10) gemäß Anspruch 10, **dadurch gekennzeichnet, dass**
die Busschnittstelle (52) so konfiguriert ist, dass sie das Steuersignal vom Nutzer akzeptiert und den Nutzer den Status des integrierten Greifers (10) überwachen lässt.

12. Integrierter Greifer (10) gemäß einem der Ansprüche 1 bis 6, **dadurch gekennzeichnet, dass** die Stromversorgung eine Gleichstromversorgung ist und der Motor ein Gleichstrommotor ist.

13. Roboter mit dem integrierten Greifer (10) nach einem der Ansprüche 1 bis 12.

## Revendications

1. Dispositif de préhension intégré (10), dans lequel ledit dispositif de préhension intégré (10) comprend un processeur noyau (20), un élément servo-doigt de dispositif de préhension (30), un élément pneumatique (40) et un élément d'interface (50) ;
ledit élément servo-doigt de dispositif de préhension (30) comprend au moins deux doigts (31), un servo-actionneur (32) et un moteur (33), lesdits doigts (32) étant entraînés par ledit moteur (33) pour prendre et/ou déplacer un objet ;
ledit élément pneumatique (40), comprenant une coupe (41), un générateur de vide (42) et un actionneur pneumatique (43), est configuré pour aspirer et/ou souffler un objet ;
ledit processeur noyau (20) est configuré pour commander ledit servo-actionneur (32) dudit élément servo-doigt de dispositif de préhension (30) et dudit actionneur pneumatique (43) dudit élément pneumatique (40) ; et
ledit élément d'interface (50) comprend une interface d'alimentation électrique (51), une interface de bus (52) et une interface d'entrée d'air (53), ladite interface d'alimentation électrique (51), ladite interface de bus (52) et ladite interface d'entrée d'air (53) pouvant être connectées à une alimentation électrique, un bus et une entrée d'air respectivement.

2. Dispositif de préhension intégré (10) selon la revendication 1, **caractérisé en ce que**,
ledit dispositif de préhension intégré (10) comprend en outre un élément de vision (60), pour la détection et le calcul d'objets, et ledit processeur noyau (20) est configuré pour commander ledit élément de vision (60).

3. Dispositif de préhension intégré (10) selon la revendication 2, **caractérisé en ce que**,
ledit élément de vision (60) comprend une caméra (61) et une unité de calcul de vision autonome (64),
ladite caméra (61) comprenant un éclairage de caméra (62) et une lentille de caméra (63),
ladite unité de calcul de vision autonome (64) étant commandée par ledit processeur noyau (20) et apte à fournir en sortie des résultats audit processeur noyau (20) .

4. Dispositif de préhension intégré (10) selon la revendication 1, **caractérisé en ce que**,
ledit élément pneumatique (40) comprend en outre un filtre (44) et un capteur de pression (45),
ledit capteur de pression (45) étant configuré pour détecter la pression d'air de ladite coupe (41),

5. Dispositif de préhension intégré (10) selon la revendication 1, **caractérisé en ce que**,
ledit élément pneumatique (40) comprend en outre un générateur de vide (42), une première soupape (46) et une deuxième soupape (47),
ladite première soupape (46) et ladite deuxième soupape (47) étant configurées pour s'ouvrir et se fermer en alternance, pour amener ladite coupe (41) à aspirer ou à souffler un objet.

6. Dispositif de préhension intégré (10) selon la revendication 1, **caractérisé en ce que**,
ledit dispositif de préhension intégré(10) comprend un, deux ou plus de deux desdits éléments pneumatiques (40).

7. Dispositif de préhension intégré (10) selon l'une quelconque des revendications 1 à 6, **caractérisé en ce que**,
ledit élément servo-doigt (30) comprend en outre une boîte de vitesses (34) et un mécanisme à pignon et crémaillère (35),
ladite boîte de vitesses (34) et ledit mécanisme à pignon et crémaillère (35) étant configurés pour entraîner lesdits doigts (31) à se déplacer en parallèle, pour prendre et/ou déplacer un objet.

8. Dispositif de préhension intégré (10) selon la revendication 7, **caractérisé en ce que**,
ledit processeur noyau (20) commande le courant, la vitesse et la position dudit élément servo-doigt de préhension (30) par le biais dudit servo-actionneur (32).

9. Dispositif de préhension intégré (10) selon la revendication 8, **caractérisé en ce que**,
ledit élément servo-doigt (30) comprend en outre une unité de rétroaction de position pour former une commande en boucle fermée.

10. Dispositif de préhension intégré (10) selon l'une quelconque des revendications 1 à 6, **caractérisé en ce que**,
ledit dispositif de préhension intégré (10) est commandé par un utilisateur par le biais dudit bus.

11. Dispositif de préhension intégré (10) selon la revendication 10, **caractérisé en ce que**,
ladite interface de bus (52) est configurée pour accepter le signal de commande de l'utilisateur, et laisser l'utilisateur continuer à surveiller l'état dudit dispositif de préhension intégré (10).

12. Dispositif de préhension intégré (10) selon l'une quelconque des revendications 1 à 6, **caractérisé en ce que**,
ladite alimentation électrique est une alimentation en courant continu (DC), et ledit moteur est un moteur à courant continu.

13. Robot comprenant le dispositif de préhension intégré (10) selon l'une quelconque des revendications 1 à 12.
